# EUROPÄISCHE PATENTSCHRIFT

(11) **EP 0 665 381 B1**
(45) Veröffentlichungstag und Bekanntmachung des Hinweises auf die Patenterteilung: **02.09.1998**
(21) Anmeldenummer: 95101061.0
(22) Anmeldetag: 26.01.1995
(51) Int. Cl.: F15B 11/17, F15B 7/00, F16K 31/124, B63H 3/04

(54) **Vorrichtung zum Betreiben von hydraulisch betätigten Armaturen**
System for operating hydraulically actuated valves
Dispositif pour actionner des valves à commande hydraulique

(30) Priorität: 28.01.1994 DE 4402557; 22.04.1994 DE 9406760 U
(43) Veröffentlichungstag der Anmeldung: 02.08.1995
(73) Patentinhaber: PAUL PLEIGER Maschinenfabrik GmbH & Co. KG, 58423 Witten (DE)
(72) Erfinder: Marian, Alfred Dieter, D-45549 Sprockhövel (DE); Straatsma, Heinz, D-58453 Witten (DE)
(74) Vertreter: Klingseisen, Franz, Dipl.-Ing.

(56) Entgegenhaltungen:
- EP-A- 0 071 228
- EP-A- 0 081 703
- EP-A- 0 482 329
- DE-B- 1 245 244
- DE-B- 1 450 588
- DE-B- 1 550 372

## Beschreibung

Die Erfindung betrifft eine Vorrichtung nach dem Oberbegriff des Anspruchs 1.

Eine Vorrichtung dieser Art ist aus DE-B-1 550 372 bekannt, wobei die auf einem Tankschiff vorhandenen Armaturen, wie Schieber, Klappen und dergleichen, durch eine doppelt wirkende hydraulische Verstelleinrichtung verstellt werden, die über ein Ventil angesteuert werden, dessen Betätigung durch ein entfernt in einer Zentrale angeordnetes hydraulisches Steuerventil gesteuert wird. Um hydraulische Steuerleitungen einsparen zu können, werden an dem Steuerventil ein Druckanschluß, ein Steueranschluß und ein Rücklaufanschluß in Verbindung mit einer bestimmten hydraulischen Schaltung vorgesehen, wobei zu jeder Armatur Hydraulikleitungen führen. Für die Druckmittelversorgung der zentralen Steuerstelle einerseits und der Armaturen andererseits sind von Antriebsmotoren angetriebene Pumpen vorgesehen.

Aus EP-A-0 482 329 ist ein hydraulischer Stellantrieb für Steuer-und Regelarmaturen bekannt, wobei auf einem Trägerblock der hydraulische Steuerzylinder, ein elektrischer Antriebsmotor, ein Ausgleichsspeicher und ein Stellungsmelder montiert sind. Innerhalb des Trägerblocks sind Hydraulikleitungen vorgesehen.

Die auf Schiffen verwendeten Druckmittelleitungen zur Steuerung der hydraulisch betätigten Armaturen von einer zentralen Versorgungsquelle aus haben verschiedene nachteilige Auswirkungen wie Kompressibilität des Druckmittels bei langen Leitungen, es können hydraulisch eingespannte Armaturen bei Belastung öffnen, es treten Leckagemöglichkeiten unter Deck und auf Deck auf, es gibt Probleme mit Umweltverschmutzung, es ist aufwendiges Spülen der gesamten Rohrleitungssysteme vor der Inbetriebnahme und nach Reparaturen nötig, und es treten Drosselverluste durch die Steuerelemente auf. Vor allem spielt die Sicherheitsrelevanz des gesamten Systems eine wesentliche Rolle.

Im Schiffbau werden teilweise ca. 80 bis 140 Armaturen von einer zentralen Versorgungsstation mit hydraulischem Druckmittel gespeist. Kommt die zentrale Hauptdruckleitung zu Schaden, so ist ein Druckaufbau nicht mehr gegeben und die gesamte Anlage ist außer Funktion.

Jedoch wird aus Gründen der Zuverlässigkeit der Schwenk- und Stellmotore unter Berücksichtigung der hohen auftretenden Stoßkräfte und -momente nach wie vor die zentrale Druckmittelversorgung für die verschiedenen Armaturen verwendet, da Versuche mit dezentral angeordneten Elektromotoren als Antriebsmittel, die über ein mechanisches Getriebe die Armatur antreiben, zeigten, daß diese Antriebe den Belastungen nicht standhielten, insbesondere wegen der im Betrieb solcher Armaturen auftretenden Stoßkräfte. Für diese Antriebssysteme hat sich deshalb die Hydraulik durchgesetzt und behauptet.

Der Erfindung liegt die Aufgabe zugrunde, unter Beibehaltung der Vorteile der hydraulischen Systeme, die sich seit Jahrzehnten bewährt haben, eine Vereinfachung dieser Systeme zu erreichen und insbesondere die Sicherheitsrelevanz dieser Systeme zu erhöhen, bei gleichzeitiger Kostenreduzierung und verbesserter Umweltverträglichkeit.

Diese Aufgabe wird erfindungsgemäß durch die Merkmale im Kennzeichnenden Teil des Anspruchs 1 gelöst. Alle Elemente zur Betätigung der Armaturen sind in eine Baueinheit integriert, wobei jede Station bzw. Baueinheit eine Mini-Versorgungsquelle aufweist und jegliche Rohrleitungen entfallen. Auf diese Weise werden die einzelnen Armaturen dezentral mit Druckmittel versorgt, während die Ansteuerung nach wie vor zentral von einem Steuerpult aus erfolgt, jedoch über elektrische Leitungen anstelle der bisher gebräuchlichen Hydraulikrohrleitungen.

Mit diesen dezentralen Kompakteinheiten für die Armaturen ergeben sich gegenüber dem herkömmlichen System folgende Vorteile:
- Durch dezentrale Versorgungsquellen sind bei Ausfall einer Ansteuerung alle anderen Armaturen betriebsbereit, so daß keine Totalausfälle auftreten und sich höchste Sicherheit ergibt.
- Es sind keine großen Ölmengen im Hydrauliksystem vorhanden, da alle Zuleitungen zu den Kompakteinheiten entfallen. Die Reduzierung der Ölmengen erhöht die Umweltfreundlichkeit des Systems.
- Durch Einsparung des gesamten Rohrleitungssystems mit Spülen sowie zentralem Versorgungsaggregat und der aufwendigen Steuerschränke ergibt sich ein kostengünstiger Aufbau.
- Durch die Kompaktbauweise des Antriebs ist es möglich, eine exakte Drehmoment- und Hubkraftbegrenzung bei Schwenkantrieben und Stellmotoren zu erhalten.
- Durch den Zusammenbau der hydraulischen Einheit mit integrierter Versorgungspumpe werden Stoßbelastungen gedämpft, wie sie bei Lenz-, Ballast-, Cargo- und Brennstoffarmaturen auftreten.
- Durch die Kompaktbauweise treten keine Drosselverluste mehr auf, da Steuerelemente, wie sie bei bisherigen Hydrauliksystemen notwendig sind, entfallen und das Öffnen und Schließen der Armatur bei Schwenktrieben mittels Drehrichtungsumkehr der Antriebseinheit erfolgt.
- Insgesamt ergibt sich eine enorme Energieeinsparung, da im Gegensatz zu den bisherigen Systemen die Antriebe nur während des Betriebes eingeschaltet sind, während bei zentralen Versorgungsstationen der Betriebsdruck ständig aufrechterhalten bleiben muß (24 Stunden/Tag).
- Ein weiterer Vorteil der hydraulisch-elektrischen Kompaktbauweise ist, daß eine stufenlose Einstellung der Antriebseinheit vorgenommen werden kann, die individuell angepaßt ist an die verschiedenen Größen in Bezug auf Schwenk-und Hubzeiten.

Beispielsweise Ausführungsformen der Erfindung werden nachfolgend an Hand der Zeichnung näher erläutert. Es zeigen:
- Fig. 1: schematisch den Aufbau von Baueinheiten aus Armatur und dezentralem Antrieb,
- Fig.2: eine schematische Darstellung der elektrischen Ansteuerung der Armaturen von Fig. 1,
- Fig. 3: schematische Darstellung einer anderen Ausführungsform der Überwachung einer der Armaturen,
- Fig. 4: eine weitere Ausführungsform der Ansteuerung mehrerer Armaturen,
- Fig. 5: eine Abwandlung der Ansteuerung mit Busschnittstellen,
- Fig. 6: Einzelheiten einer in die Baueinheit integrierten Busschnittstelle,
- Fig. 7: in einer Seitenansicht eine an eine Armatur angebaute Antriebseinheit,
- Fig. 8: einen Schnitt durch die Antriebseinheit von Fig. 7, und
- Fig. 9: eine Seitenansicht der Ausführungsform von Fig. 7 teilweise im Schnitt.

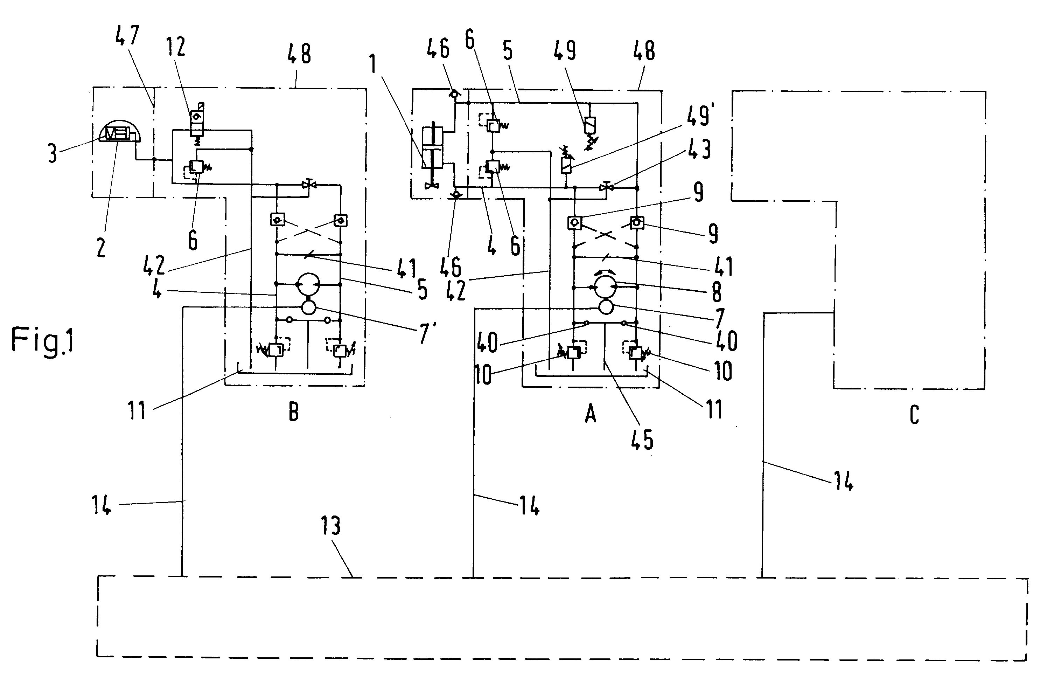

Fig. 1 zeigt schematisch zwei Armaturen in Form eines Ventils 1 und eines Schwenktriebes 2 mit Federrückzug, wobei der Kolben des Schwenktriebs 2 einseitig mit Druckmittel gegen die Kraft einer Feder 3 beaufschlagt wird, während der Kolben des Ventils 1 von beiden Seiten direkt durch Leitungen 4 und 5 innerhalb des Gehäuses der Baueinheit mit Druckmittel beaufschlagt wird. Zwischen den beiden Leitungen 4 und 5 sind zwei Druckbegrenzerventile 6 in die Baueinheit integriert, die als Sicherheitseinrichtung bei Temparaturerhöhung, Ausdehnung des Druckmittels und dgl. dienen. Zwischen den beiden Druckbegrenzungsventilen führt eine Leitung 42 zu einem Reservoir 11. Bei 9 sind entsperrbare Rückschlagventile in den Leitungen 4,5 wiedergegeben, die die Armatur in der vorgewählten Position halten und nur dann öffnen, wenn der Druck in der Gegenleitung 5b zw. 4 aufgebaut wird, wie durch sich kreuzende gestrichelte Linien in Fig. 1 angedeutet ist. Die Steuerung des Ventils 1 in Richtung AUF/ZU erfolgt über die Drehrichtungsumkehr eines Elektromotors 7, der eine Pumpe 8 antreibt, die innerhalb der kompakten Baueinheit zwischen den Leitungen 4,5 angeordnet ist, die von der Pumpe 8 je nach Drehrichtung mit Druckmittel versorgt werden. Die beiden Leitungen 4, 5 führen zu dem Reservoir 11, das nur klein ausgebildet ist, wobei vor dem Ende dieser beiden Leitungen 4, 5 jeweils ein Druckbegrenzungsventil 10 angeordnet ist. Mit 40 sind gegeneinander geschaltete Rückschlagventile bezeichnet, wobei die Pumpe 8 bei Drehrichtung nach rechts bspw. über das linke Rückschlagventil 40 Druckmittel aus dem Reservoir 11 über die Leitung 45 ansaugt, während das rechte Rückschlagventil 40 sperrt und umgekehrt. Mit 41 ist eine einstellbare Drossel bezeichnet, die in Förderrichtung der Pumpe 8 zwischen den beiden Leitungen 4, 5 angeschlossen ist. Mittels der einstellbaren Drossel 41 ist eine stufenlose Einstellung und damit eine individuelle Anpassung der Antriebseinheit an die verschiedenen Nenngrößen in Bezug auf Schwenk- oder Hubzeiten möglich. Durch Einstellen dieser Drossel ist es möglich, von dem Förderstrom der Pumpe einen Teilstrom über diese einstellbare Drossel auf die Saugseite der Pumpe zurückzuleiten, bspw. um die Fahrgeschwindigkeit der Armatur einzustellen. Mit 43 ist ein Hahn in einer Verbindungsleitung zwischen den Leitungen 4 und 5 bezeichnet, der mit der Leitung 42 zum Reservoir 11 verbunden und für einen eventuellen Handbetrieb vorgesehen ist.

Die Druckbegrenzungsventile 10 zwischen Pumpe 8 und Reservoir 11 schützen die Anlage vor Überdruck und sie dienen gleichzeitig zur Hubkraftbegrenzung des Antriebs, weil sie auf einen entsprechenden Druck eingestellt werden können. Da die auf den beiden Seiten der Pumpe 8 angeordneten Druckbegrenzungsventile 10 unterschiedlich eingestellt werden können, ist es möglich, daß die Pumpe in der einen Drehrichtung einen höheren Druck aufbaut als in der anderen Drehrichtung. Durch die Einstellung der Druckbegrenzungsventile 10 ist eine exakte Drehmoment- und Hubkraftbegrenzung bei Schwenkantrieben und Stellmotoren möglich, indem die Druckbegrenzungsventile 10 auf den gewünschten Druck eingestellt werden.

Bei 46, 46' ist jeweils ein mit einem Rückschlagventil versehener Anschluß an der Armatur bezeichnet, der mit der zugeordneten Leitung 4 bzw. 5 in Verbindung steht. An diese Anschlüsse kann eine Handpumpe angeschlossen werden, um das Ventil 1 verstellen zu können, wenn beispielsweise bei Stromausfall die Pumpe 8 nicht betriebsfähig sein sollte. Bei 47 ist in Fig. 1 die Trennebene zwischen Armatur 1 bzw. 2 und der durch die wiedergegebene hydraulische Schaltung gebildeten Antriebseinheit 48 angedeutet. Mit 49 und 49' ist jeweils ein Druckschalter bezeichnet, der an der Leitung 4 bzw. 5 angeschlossen ist.
Anstelle der Drehrichtungsumkehr des Elektromotors 7 für die Umsteuerung der Druckmittelbeaufschlagung auf den beiden Seiten der Armatur bzw. des Ventils 1 ist es auch möglich, einen nur in einer Richtung drehenden Elektromotor vorzusehen, wobei der Pumpe 8 ein elektrisch umschaltbares Steuerventil nachgeschaltet ist, mittels dem der von der Pumpe 8 gelieferte Druck auf die eine oder andere Druckmittelleitung 4 bzw. 5 umgesteuert werden kann.

Anstelle der in beiden Richtungen wirksamen Drossel 41 können bei der Baueinheit A auch parallel geschaltete Hähne zwischen den beiden Druckmittelleitungen 4 und 5 vorgesehen werden, wobei mittels des einen Hahnes die Druckmittelleitung 5 mit dem Reservoir 11 verbindbar ist, während mittels des anderen Hahnes die Druckmittelleitung 4 mit dem Reservoir 11 verbindbar ist. Auf diese Weise kann die Schwenk- bzw. Hubzeit in der einen Richtung anders eingestellt werden als in der Gegenrichtung, indem die beiden Hähne unterschiedlich weit geöffnet werden, so daß aus der jeweiligen Druckleitung 4 bzw. 5 eine unterschiedliche Teilmenge in das Reservoir 11 abgezweigt wird. Diese in Fig. 1 nicht dargestellten, parallel geschalteten Hähne können auch anstelle des Hahnes 43 vorgesehen werden, wobei zum mechanischen Verstellen der Armatur 1 beide Hähne geöffnet werden, damit die beiden Druckmittelleitungen 4 und 5 mit dem Reservoir 11 verbunden sind, um die mechanische Verstellung der Armatur bzw. des Ventils 1 zu ermöglichen.

Der gleiche hydraulische Schaltungsaufbau ist bei der Armatur 2 vorgesehen, wobei in der Sicherheitseinrichtung anstelle eines zweiten Druckbegrenzungsventils 6 ein magnetisch betätigbares Ventil 12 vorgesehen ist, das an die zum Reservoir führende Leitung 42 angeschlossen ist und bspw. beim Spannungsausfall die mit Druck beaufschlagte Seite der Armatur 2 freigibt, so daß die Feder 3 die Armatur schließen kann. Bei Druckbeaufschlagung der Armatur 2 kommt das Rückschlagventil in dem Ventil 12 zur Wirkung, so daß die Rücklaufleitung zum Reservoir gesperrt ist. Bei dieser Anordnung dreht die Pumpe 8 bspw. nur nach links, so daß die Leitung 5 nicht zur Wirkung kommt. Wie bei der Einheit A ist das Druckbegrenzungsventil 6, das an die Druckleitung 4 angeschlossen ist, mit der Rücklaufleitung 42 zum Reservoir 11 verbunden.

Die durch strichpunktierte Linien wiedergegebenen Blöcke der kompakten Baueinheit können in einem gemeinsamen oder zusammengesetzten Gehäuse angeordnet sein. Die einzelnen Kompakteinheiten sind mit A, B und C bezeichnet, wobei C für eine beliebige andere Armatur steht und weitere solche Kompakteinheiten vorgesehen sein können, bspw. für Brennerventile, Regelventile und dgl. Armaturen. Die einzelnen Baueinheiten sind hydraulisch gekapselt und nur mit einer elektrischen Versorgungsleitung 14 verbunden, die von einem von den Armaturen entfernt liegenden Steuerpult 13 zu den einzelnen Elektromotoren 7 führen.

Die hydraulische Schaltung der Armaturen nach Fig. 1 unterscheidet sich von den bekannten hydraulischen Schaltungen. Üblicherweise werden die Armaturen über 4/2-Wegeventile in den Steuerschränken über hydraulische Leitungen gesteuert, wobei entsprechende Drosselverluste auftreten. Bei der hydraulischen Schaltung nach Fig. 1 werden alle Armaturen durch Drehrichtungsumkehr des Elektromotors drosselfrei betätigt.

Durch die Kompaktbauweise können die Vorteile der elektrischen Ansteuerung ausgenutzt und die Vorteile der Hydraulik beibehalten werden, wobei alle wesentlichen hydraulischen Steuerelemente in der Baueinheit integriert sind und gesonderte Rohrleitungen entfallen.

Durch die Kompaktbauweise sind die angesteuerten Ölvolumina sehr gering. Eine Druckmittelkompressibilität macht sich nicht bemerkbar, und offene oder geschlossene Armaturen können in der vorgewählten Position durch Druckmittelausdehnung bzw. kompressibilität nicht verändert werden. Hierdurch ergibt sich ein höherer Sicherheitsgrad gegenüber den bekannten Systemen.

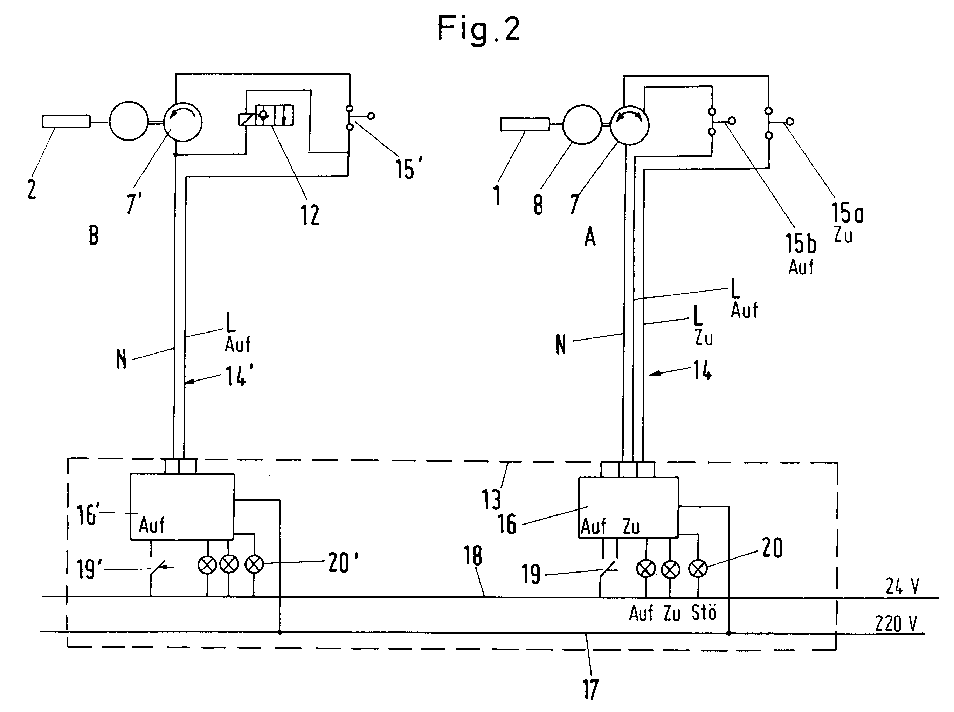

Fig. 2 zeigt schematisch eine erste Ausführungsform der elektrischen Ansteuerung der Armaturen der in Fig. 1 wiedergegebenen Art. Die Baueinheiten A,B und C, die in einer größeren Entfernung voneinander angeordnet sein können, werden vom Steuerpult 13 aus gesteuert, das auf einem Schiff in einer erheblichen Entfernung von den Baueinheiten angeordnet sein kann.

Zum Elektromotor 7 der beidseitig beaufschlagten Armatur 1 führt ein dreiadriges Kabel 14 mit einem Nulleiter N und zwei Leitern L_{AUF} und L_{ZU}, die den Elektromotor 7 in Drehrichtung links bzw. rechts beaufschlagen. In den beiden Leitern L_{AUF} und L_{ZU} ist jeweils ein Schalter 15a bzw. 15b angeordnet, der auf ein Signal von einem nicht dargestellten Endschalter, der die Endstellung des Stellgliedes aufnimmt, den zugeordneten Leiter unterbricht, um den Elektromotor 7 abzuschalten, wenn das Stellglied der Armatur 1 die angesteuerte Endstellung erreicht hat. Im Steuerpult 13 ist die Leitung 14 an eine Schaltung 16 angeschlossen, die mit der Kraftstromleitung 17 von 220 Volt Wechselstrom verbunden ist. Mit 18 ist eine Steuerleitung von 24 V Gleichstrom bezeichnet, an die Steuer- und Anzeigeelemente wie ein Schalter 19 und Anzeigelampen 20 angeschlossen sind, die auch mit der Schaltung 16 verbunden sind.

Der Einheit B ist im Steuerpult 13 eine entsprechende Schaltung 16' zugeordnet, die in der gleichen Weise angeschlossen ist, wobei die Leitung 14' aus einem zweiadrigen Kabel besteht, nachdem der Elektromotor 7' nur in eine Richtung drehen muß, weil die Armatur 2 in der Gegenrichtung federbeaufschlagt ist. Im Leiter L_{AUF} ist wiederum ein Schalter 15' angeordnet. Das in Fig 1 wiedergegebene Magnetventil 12 zum Entsperren des an der Armatur 2 anliegenden hydraulischen Drucks ist derart zwischen dem Leiter L_{AUF} und dem Nulleiter N geschaltet, daß bei geschlossenem Schalter 15' das Magnetventil 12 die in Fig. 1 wiedergegebene Hydraulikleitung über das Rückschlagventil schaltet, so daß der in der Armatur aufgebaute hydraulische Druck gehalten wird. Die Freigabe des Drucks erfolgt durch Spannungsfreischaltung des Leiters L_{AUF} in der Schaltung 16 oder in entsprechender Weise bei Spannungsausfall, so daß das Magnetventil 12 den Durchfluß aus der Armatur 2 freigibt und die Feder 3 das Ventil schließt.

Die in Fig. 2 wiedergegebene Steuervorrichtung arbeitet wie folgt. Wenn in der Einheit A der Schwenktrieb 1 bspw. aus der Offenstellung in die Schließstellung bewegt werden soll, wird der Schalter 19 am Steuerpult 13 in Richtung ZU betätigt, so daß durch die Schaltung 16 die Kraftstromleitung 17 an den Leiter L_{ZU} angeschlossen wird. Die beiden Schalter 15a, 15b sind in der Ruhestellung geschlossen, so daß Strom zum Motor fließt. Hierbei dreht der Elektromotor 7 bspw. nach rechts, bis der Schwenktrieb 1 seine Schließstellung erreicht. Bei Erreichen der Schließstellung wird über den nicht dargestellten wegabhängigen Endschalter der Schalter 15 b geöffnet und damit der Elektromotor 7 abgeschaltet. In entsprechender Weise wird zum Öffnen der mit dem Schwenktrieb 1 verbundenen Klappe der Schalter 19 in Stellung AUF geschaltet, worauf über die Schaltung 16 der Leiter L_{AUF} an die Kraftstromleitung 17 angeschlossen wird. Sobald die Offenstellung erreicht ist, wird wiederum der Schalter 15 a geöffnet, so daß der Elektromotor abgeschaltet wird.

Anstelle eines einzelnen Schalters 19 im Steurpult können auch bspw. zwei Schalter vorgesehen werden, einer für die Offenstellung und einer für die Schließstellung. Ebenso ist ein Betrieb mit Taster zum Ansteuern der Schaltung 16 möglich.

Damit das Erreichen der Endstellung am Steuerpult 13 angezeigt wird, wird in der Schaltung 16 durch eine Meßschaltung überwacht, ob über den Leiter L_{AUF} bzw. L_{ZU} Strom fließt oder der betreffende Leiter durch den Schalter 15 unterbrochen ist. Es sind Anzeigelampen 20 für AUF, für ZU und für eine Störungsanzeige vorgesehen, falls das Stellglied in der Armatur die Endstellung nicht erreichen sollte. Dies wird durch einen Zeitgeber in der Schaltung 16 überwacht, der auf die übliche Laufzeit des Stellgliedes der Armatur eingestellt ist. Wird beispielsweise von keinem der wegabhängigen Endschalter eine Endstellung des Stellgliedes angezeigt und damit der zugeordnete Schalter 15 nicht geöffnet, so läuft der Motor 7 weiter. Dies wird in der Schaltung 16 über den Zeitgeber als Störung erkannt und durch die entsprechende Lampe angezeigt, wobei dann von der Schaltung 16 aus der Motor 7 abgeschaltet wird, nachdem eine Abschaltung über die Schalter 15 nicht erfolgt.

Die Steuervorrichtung der Einheit B arbeitet in entsprechender Weise. Zum Öffnen des Ventils 2 entgegen der Kraft der Feder 3 wird beispielsweise der Schalter 19' am Steuerpult 13 betätigt, so daß der Leiter LAUF mit der Kraftstromleitung 17 verbunden wird und der Motor in Betrieb gesetzt wird. Nach Erreichen der Endstellung wird der Endschalter 15'geöffnet und die Stromzufuhr zum Motor 7' unterbrochen. Dies wird in der Schaltung 16' durch Überwachen des Stromflusses im Leiter festgestellt und durch eine der Lampen 20' angezeigt. Zum Schließen des Ventils 2 durch Federkraft genügt es, durch Umschalten des Schalters 19' die Verbindung zwischen der Kraftstromleitung 17 und dem Leiter zu unterbrechen, wodurch über das Magnetventil 12 der hydraulische Druck am Stellkolben des Ventils 2 abgebaut und das Ventil durch Federkraft geschlossen wird.

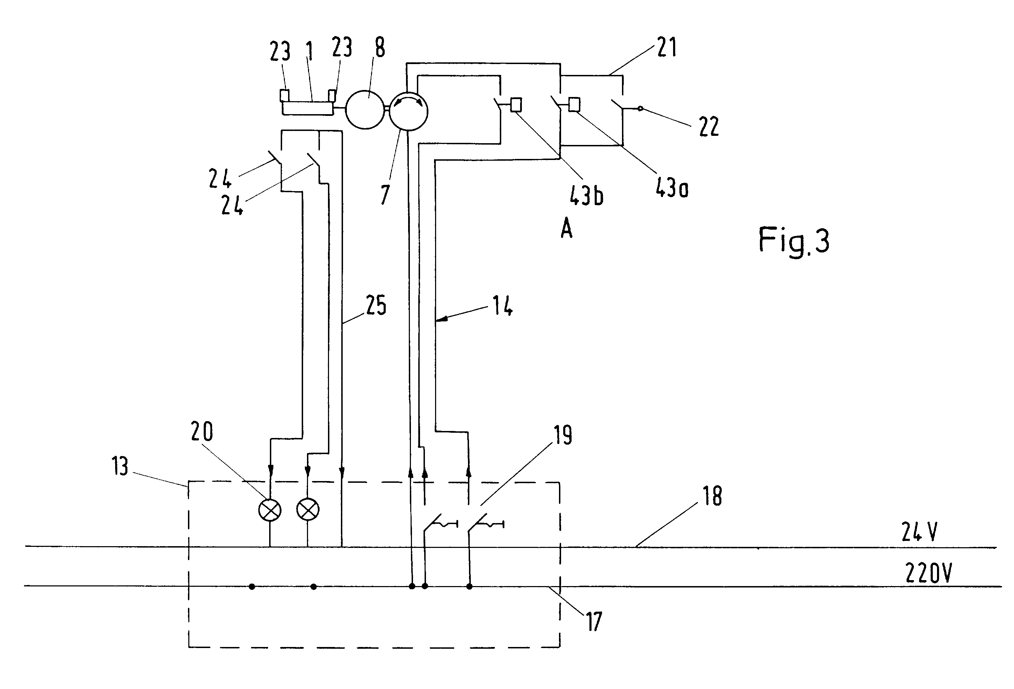

Fig. 3 zeigt eine Ausführungsform, bei der an der Armatur 1 Endlagenschalter 23 zum Feststellen der Endstellung des Stellgliedes vorgesehen sind. Diese Endlagenschalter 23 beaufschlagen Schalter 24 in den Leitern eines Anzeigekabels 25, das zum Steuerpult 13 führt.

Für die Endschalter 23 können verschiedene Ausführungsformen vorgesehen werden, bspw. mechanische Endlagenschalter, elektrische Endschalter und dgl. Durch die Stellungsrückmeldung auf Grund der Endlagenschalter 23, 24 kann eine Stellungsanzeige direkt erfolgen.

In Fig. 3 sind Druckschalter 43a, 43b in den zum Elektromotor führenden Leitern der Versorgungsleitung 14 vorgesehen, die durch den Druck des Druckmittels beaufschlagt werden. Diese Druckschalter dienen zum Abschalten des Motors 7, wenn dieser die Endstellung erreicht hat und durch Weiterlaufen des Motors ein erhöhter Druck aufgebaut wird, auf den die Schalter 43 zum Abschalten des Motors ansprechen. Die Endschalter 23, 24 dienen lediglich zur Anzeige der Endstellung.

Eine von dem Schwenktrieb 1 betätigte Klappe wird in der Schließstellung häufig in einen Dichtungsring eingedrückt, so daß es zum Öffnen der Klappe eines höheren Drucks bedarf als beim Anfahren aus der Offenstellung in Richtung Schließstellung. Wenn in einem solchen Falle die Klappe geöffnet werden soll, ist somit ein höherer Anfahrdruck erforderlich, der zu einem Öffnen des Druckschalters 43a führt. Hierdurch würde eine vorzeitige Unterbrechung des Motorbetriebs ausgelöst. Um dies zu vermeiden, ist bei der Baueinheit A eine Umgehungsleitung 21 am Druckschalter 43a vorgesehen, in der ein Wegendschalter 22 angeordnet ist, der bspw. bis zu einer Klappenverdrehung von 3 bis 5° die Umgehungsleitung 21 geschlossen hält, so daß auch bei kurzzeitigem Öffnen des Druckschalters 43a der Motor 7 mit Strom versorgt wird. Hat die Klappe eine Schwenkbewegung von 3 bis 5° aus der Schließstellung ausgeführt, so öffnet der Schalter 22, während der Druckschalter 43a bereits geschlossen ist, weil durch Herausbewegen der Klappe aus der Schließstellung der Druck im Schwenktrieb wieder auf die übliche Druckhöhe abgesunken ist, so daß der Motor 7 mit Strom versorgt wird, bis die Endstellung erreicht ist.

Während bei den bekannten Hydrauliksystemen eine Nachjustierung der Endschalter erforderlich ist, erhält man durch die erfindungsgemäße Bauweise, bei der alle hydraulischen Steuerelemente in einer kompakten Baueinheit integriert sind, eine automatische Endbegrenzung durch Abschalten des Elektromotors durch die Endschalter bzw. Druckschalter.

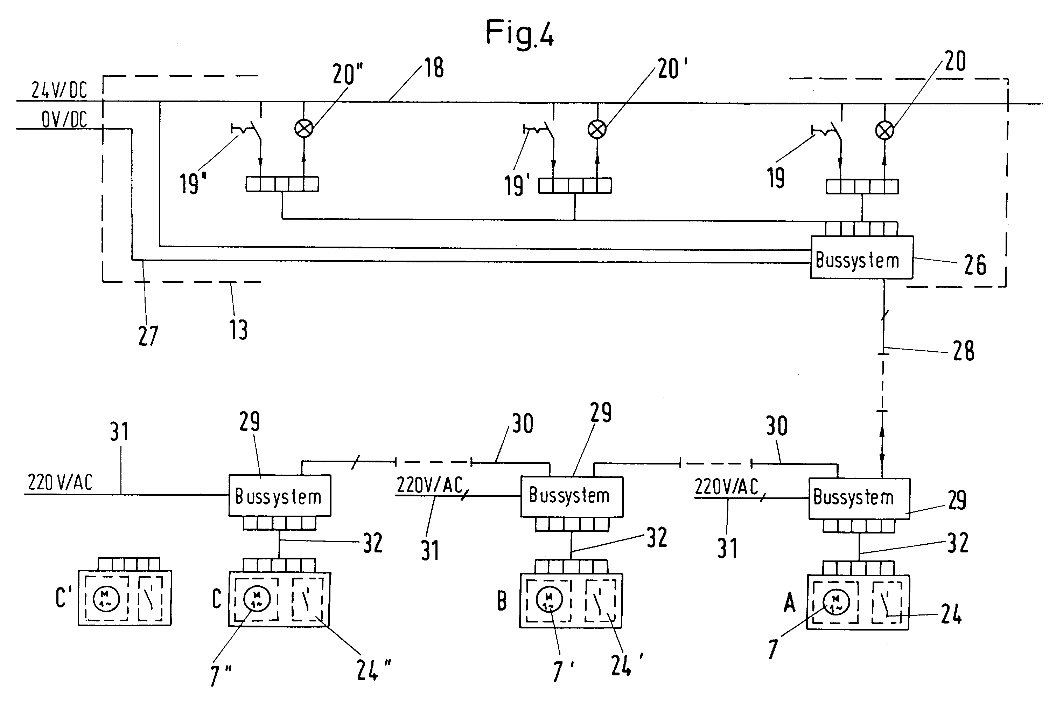

Fig. 4 zeigt schematisch die Ansteuerung der Baueinheiten A, B und C mittels eines Bussystems, wobei in den einzelnen Baueinheiten schematisch bei 7 der Elektromotor und bei 24 die Anordnung von Endlagenschaltern angedeutet ist, wie sie in Fig. 3 wiedergegeben sind für die Anzeige der erreichten Endstellung des Stellgliedes. Im Steuerpult 13 befindet sich ein Bussystem 26, das über die Leitung 18 und 27 mit 24 V mit Spannung versorgt wird. Ferner ist das Bussystem 26 mit den einzelnen Steuer- und Anzeigeelementen 19, 20 verbunden, die für die einzelnen Baueinheiten A, B und C im Steuerpult entsprechend der Darstellung in Fig. 2 vorgesehen sind.

Von dem zentralen Bussystem 26 im Steuerpult 13 führt eine Busleitung 28 zu einer an der Baueinheit A angeordneten Bussystem-Unterstation 29, die wiederum über eine Busleitung 30 mit der folgenden Bussystem-Unterstation 29 verbunden ist, die der nächsten Baueinheit B zugeordnet ist. In entsprechender Weise sind die Bussysteme 29 der folgenden Baueinheiten angeschlossen. Die Kraftstromzuführung erfolgt bei dieser Ausführungsform bei 31 an der jeweiligen Unterstation 29 des Bussystems. Von der jeweiligen Bussystem-Unterstation 29 führt eine Anschlußverkabelung 32 zur jeweiligen Baueinheit. Bei dieser Ausführungsform ist es möglich, an eine Bussystem- Unterstation 29 auch mehrere Baueinheiten gleichzeitig anzuschließen, wenn mehrere Baueinheiten örtlich nahe beieinander liegen, so daß sie ohne großen Verkabelungsaufwand von einer Bussystem-Unterstation 29 angesteuert werden können, wie bei C' angedeutet.

Gegenüber den Ausführungsformen nach Fig. 2 und 3, bei denen zu jeder Baueinheit eine Leitung verlegt werden muß, ergibt sich bei der Ausführungsform nach Fig. 4 eine Vereinfachung der Verkabelung dadurch, daß lediglich eine Busleitung 28 vom Steuerpult 13 zu den einzelnen Baueinheiten führt.

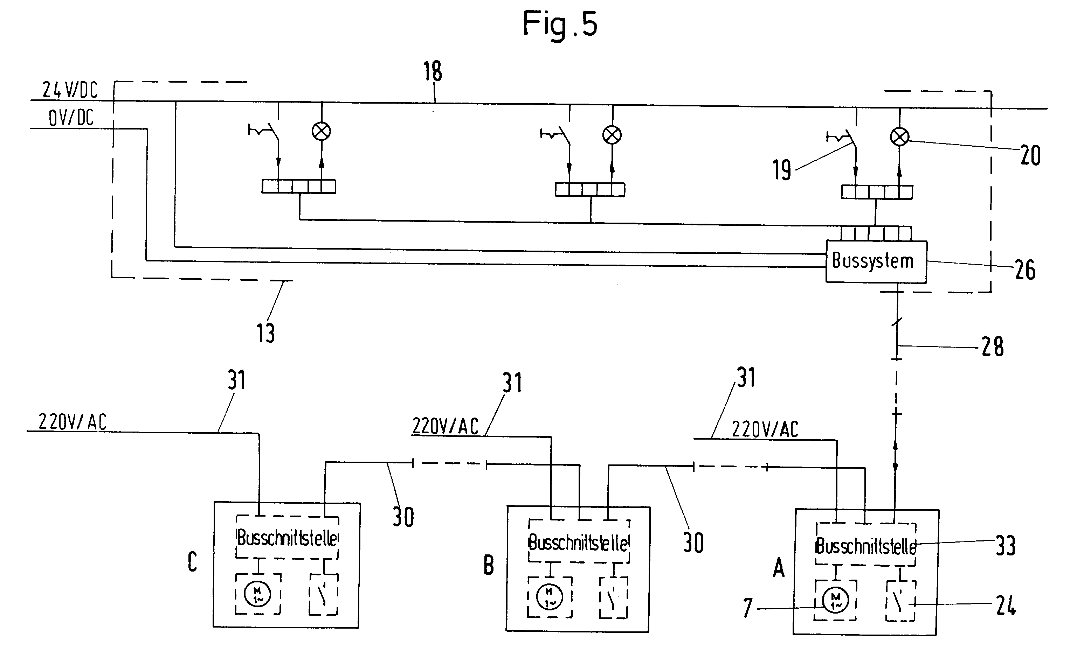

Eine weitere Ausführungsform mit integriertem Businterface zeigt Fig. 5 , wobei wie bei der Ausführungsform nach Fig. 4 ein zentrales Bussystem 26 im Steuerpult angeordnet ist und die Ansteuerung und Stellungssignalisierung über die 24 V-Steuerspannung erfolgt. Bei der Ausführungsform nach Fig. 5 ist in jeder Baueinheit eine Busschnittstelle 33 integriert, die jeweils über eine Busleitung 30 mit der Busschnittstelle der nächsten Baueinheit verbunden ist. Auch bei dieser Ausführungsform erfolgt die Kraftstromzuführung gesondert zu jeder Baueinheit über eine Leitung 31 aus dem in der Umgebung der Baueinheit vorhandenen Netz.

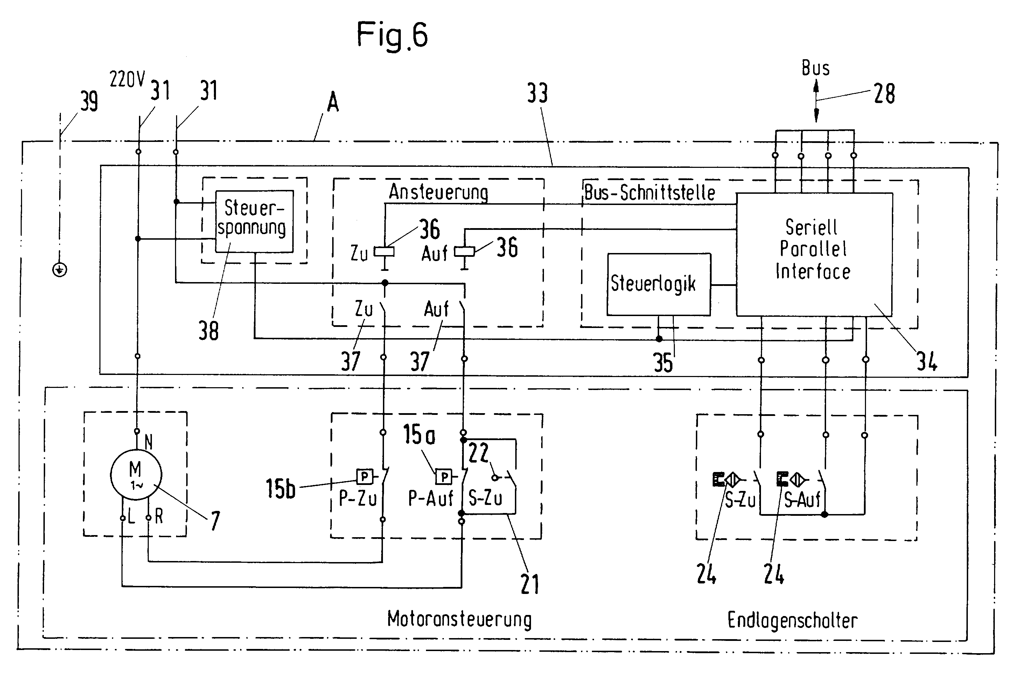

Fig. 6 erläutert die in Fig. 5 wiedergegebene Busschnittstelle 33 in Verbindung mit der Motoransteuerung und den Endlagenschaltern. Die Baueinheit entspricht der in Fig. 3 wiedergegebenen Baueinheit A mit den Endlagenschaltern 24 und den Druckschaltern 15a,15b. Wie dargestellt, sind innerhalb der Baueinheit die Endlagenschalter an eine seriell/parallel Schnittstelle 34 angeschlossen, die mit einer Steuerlogikschaltung 35 und der vom zentralen Bussystem 26 kommenden Busleitung 28 verbunden ist. Weiterhin ist die Schnittstelle 34 mit der Ansteuerung verbunden und schaltet dort die Schaltelemente 36 für die AUF-ZU-Steuerung des Elektromotors 7 über die Kontakte 37, die in der Kraftstromleitung 31 liegen. Das Schaltelement 38 stellt die Spannungsversorgung für die Schnittstelle 34 und die Steuerlogik 35 bereit. Die Motoransteuerung und die Rückmeldung der Wegendschalter erfolgt über die interne Verkabelung in der Baueinheit.

Durch die Verwendung eines Bussystems nach den Fig. 4 und 5 können auch zusätzliche Informationen an das Steuerpult übermittelt werden, bspw. über Zwischenstellungen des Stellgliedes, wenn statt der zusätzlichen Endschalter 24 die Baueinheiten auch mit Widerstandsferngebern oder entsprechenden Komponenten für die kontinuierliche Rückmeldung der Stellung des Stellgliedes ausgerüstet sind.

Die beschriebenen Ausführungsformen einer Steuervorrichtung einschließlich der kompakten hydraulischen Schaltung nach Fig. 1 können nicht nur im Schiffbau vorteilhaft eingesetzt werden, sondern auch im Chemie- und Industriebereich, wenn Regel- und Stellantriebe mit und ohne Schnellschluß vorgesehen werden.

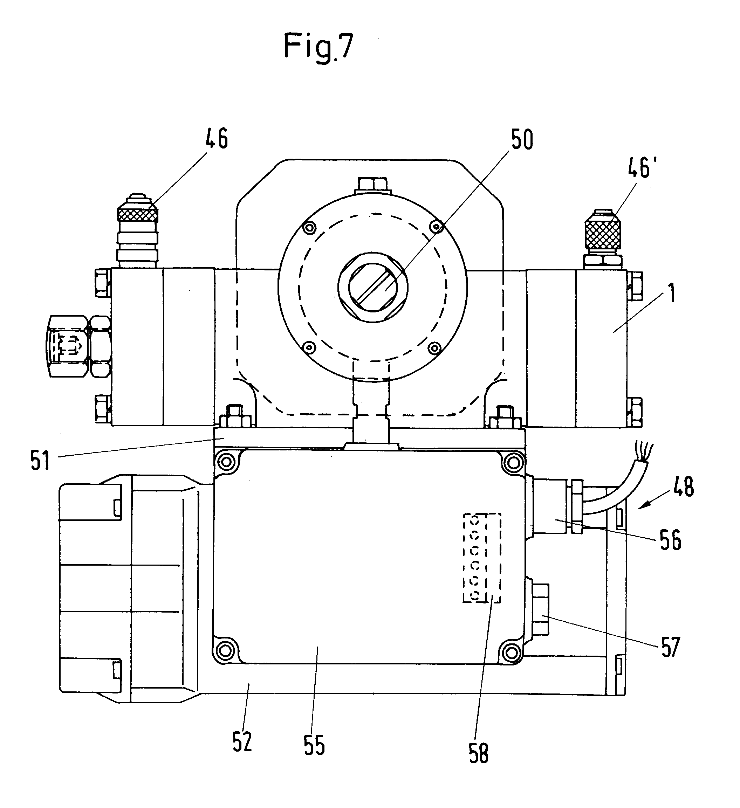

Fig. 7 zeigt eine auf beiden Seiten mit Druckmittel beaufschlagte Armatur 1 entsprechend dem Ventil 1 der Baueinheit A in Fig. 1, wobei der in Fig. 7 nicht dargestellte Kolben über eine Zahnleiste ein in der Armatur 1 gelagertes Ritzel einer Welle 50 antreibt, die mit einer nicht dargestellten Klappe oder dgl. verbunden sein kann. Bei 46, 46' sind die in Fig. 1 wiedergegebenen Anschlüsse dargestellt, die zum Anschließen eines hydraulischen Notaggregats bzw. einer Handpumpe dienen.

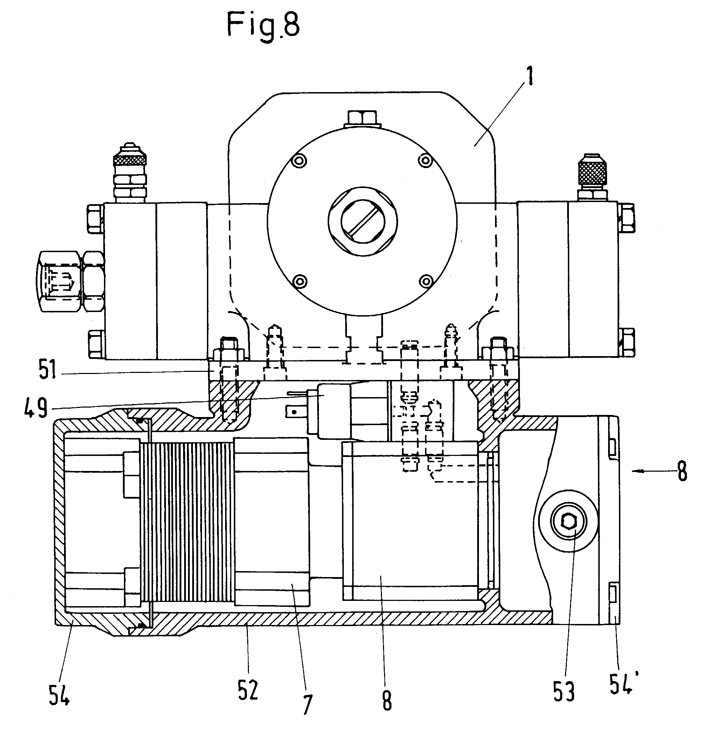

Bei dem dargestellten Ausführungsbeispiel ist an der Unterseite der Armatur 1 ein Flansch 51 in Form einer ebenen Fläche angeschraubt, an dem mittels Schrauben das Gehäuse 52 der in Fig. 1 schematisch wiedergegebenen Antriebseinheit 48 befestigt ist. In dem langgestreckten Gehäuse 52 ist der Elektromotor 7 und die von dem Elektromotor angetriebene Pumpe 8 angeordnet. Im Bereich der Pumpe 8 enthält das Gehäuse 52 hydraulische Schaltelemente bzw. Ventile und ein kleines Druckmittelreservoir 11, wie dies in Fig. 1 schematisch angedeutet ist. Die Hydraulikleitungen 4 und 5 von Fig. 1 sind durch den Flanschabschnitt 51 geführt, der der Trennebene 47 in Fig. 1 zwischen Armatur 1 und Antriebseinheit 48 entspricht. Bei 53 ist in Fig. 8 ein Einfüllstutzen für das Druckmittel bezeichnet.

Das etwa rohrförmige Gehäuse 52 ist an den beiden Enden jeweils durch einen Deckel 54 bzw. 54' dicht verschlossen. An dem rohrförmigen Gehäuse 52 ist ein Schaltkasten 55 angegossen, der ebenfalls durch einen Deckel dicht verschraubt ist. In dem Schaltkasten 55 befinden sich Kabelverschraubungen 56, 57 (Fig. 7) für die Energieversorgung des Elektromotors und für ein separates Signalkabel. Beide Kabel sind im Schaltkasten 55 an einer Klemmleiste 58 angeschlossen.

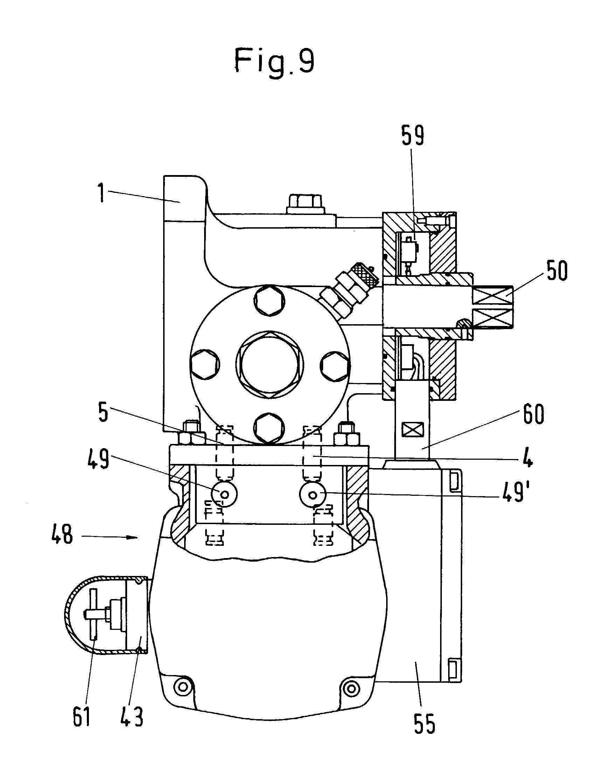

Fig. 9 zeigt an der Armatur 1 eine Einrichtung 59, die um die Welle 50 herum angeordnet ist und zum Feststellen der Endstellungen des Kolbens der Armatur 1 dient. Ein abgedichtetes Rohrstück 60 verbindet den Schaltkasten 55 mit dieser Einrichtung 59, wobei nicht dargestellte elektrische Leitungen von der Einrichtung 59 zu der Klemmleiste 58 im Schaltkasten 55 führen. Fig. 8 und 9 zeigen die in einer seitlichen Erweiterung des Gehäuses 52 angeordneten Druckschalter 49, 49' von Fig. 1. In diesem Bereich sind auch die Druckbegrenzerventile 6 im Gehäuse 52 angeordnet.

Fig. 9 zeigt einen Handgriff 61 des Hahnes 43 von Fig. 1, mittels dem die Druckmittelleitungen 4 und 5 geöffnet und mit dem Reservoir 11 verbunden werden können, wenn z.B. die Welle 50 mittels eines Werkzeugs von Hand verdreht werden soll.

## Patentansprüche

1. Vorrichtung zum Betreiben hydraulisch betätigter Armaturen, insbesondere im Schiffbau, mit von Antriebsmotoren (7) angetriebenen Pumpen (8) zum Erzeugen eines hydraulischen Drucks und einer hydraulischen Schaltung zwischen der Pumpe und Armatur, sowie einer zentralen Steuerstelle (13) für die Armaturen,
**dadurch gekennzeichnet,**
daß für jede einzelne Armatur (1,2) ein elektrischer Antriebsmotor (7) vorgesehen ist, wobei Armatur (1), elektrischer Antriebsmotor (7) und Pumpe (8) zusammen mit der hydraulischen Schaltung eine kompakte Baueinheit (A,B,C) bilden, und nur der elektrische Antriebsmotor (7) von der zentralen Steuerstelle (13) ansteuerbar ist.

2. Vorrichtung nach Anspruch 1,
dadurch gekennzeichnet,
daß in einem mit der Armatur (1,2) verbindbaren Gehäuse (52), das hydraulisch gekapselt ist, der Elektromotor (7), die Pumpe (35) und die hydraulischen Schaltelemente sowie ein Reservoir (11) ausgebildet sind, wobei für die elektrische Steuerung eine Klemmleiste (58) für den Anschluß der elektrischen Leitungen in dem Gehäuse angeordnet ist.

3. Vorrichtung nach Anspruch 1,
dadurch gekennzeichnet,
daß die Pumpe (8) über wenigstens ein einstellbares Druckbegrenzungsventil (10) mit einem Reservoir (11) verbunden ist, das in der Baueinheit (48, 52) integriert ist.

4. Vorrichtung nach Anspruch 1,
dadurch gekennzeichnet,
daß in Förderrichtung der Pumpe (8) zwischen Druckleitungen (4,5) eine einstellbare Drossel (41) angeordnet ist, die einen Rücklauf zur Saugseite der Pumpe von der Förderseite aus zuläßt.

5. Vorrichtung nach den Ansprüchen 1 bis 3,
dadurch gekennzeichnet,
daß zwischen Armatur (1, 2) und Pumpe (8) mit Steuerlementen (9,10,41) eine Sicherungseinrichtung mit wenigstens einem Druckbegrenzungsventil (6) angeordnet ist, die zum Schutz der Armatur dient und mit dem Reservoir (11) verbunden ist.

6. Vorrichtung nach den Ansprüchen 1 bis 4,
dadurch gekennzeichnet,
daß von der zentralen Steuerstelle (13) aus eine elektrische Leitung (14) zu jeder Baueinheit (A,B,C) zur Ansteuerung des Elektromotors (7) führt und in der Stromversorgungsleitung (14) Schalter (15) angeordnet sind, die bei Erreichen der Endstellung der Armatur die Stromzufuhr zum Elektromotor (7) unterbrechen, wobei in der zentralen Steuerstelle (13) eine Stromüberwachungseinrichtung vorgesehen ist, die auf das Abschalten der Schalter (15) zum Feststellen der Endstellung der Armatur anspricht.

7. Vorrichtung nach den Ansprüchen 1 bis 4,
dadurch gekennzeichent,
daß in einer in der zentralen Steuerstelle (13) vorgesehenen Schaltung (16) ein Zeitgeber vorgesehen ist, der die Stellzeit der Armatur an Hand des Signals überwacht, das von den die Stromzufuhr vom Elektromotor (7) unterbrechenden Schaltern (15) abgegeben wird.

8. Vorrichtung nach den Ansprüchen 1 bis 4,
dadurch gekennzeichnet,
daß in der zentralen Steuerstelle (13) ein Bussystem (26) vorgesehen ist, das über eine Busleitung (28) mit einzelnen an den Baueinheiten (A,B,C) vorgesehenen Unterstationen (24) in Verbindung steht, die untereinander durch Busleitungen (30) verbunden sind.

9. Vorrichtung nach Anspruch 8,
dadurch gekennzeichent,
daß in den einzelnen Baueinheiten Busschnittstellen (33) integriert sind.

10. Vorrichtung nach Anspruch 8,
dadurch gekennzeichnet,
daß die Kraftstromzuführung zu den einzelnen Baueinheiten (A,B,C) jeweils an der Bussystem-Unterstation (29) bzw. zur Busschnittstelle (33) erfolgt.

## Claims

1. Apparatus for operating hydraulically actuated valves, particularly in marine engineering, having pumps (8) for producing hydraulic pressure which are driven by drive motors (7) and a hydraulic circuit between the pump and valve, and a central control point (13) for the valves, characterised in that, for each individual valve (1, 2), there is an electric drive motor (7), whilst the valve (1), electric drive motor (7) and pump (8), together with the hydraulic circuit, form a compact assembly (A, B, C), and only the electric drive motor (7) is actuatable from the central control point (13).

2. Apparatus according to claim 1, characterised in that the electric motor (7), the pump (35) and the hydraulic switching members and a reservoir (11) are provided in a housing (52) which is connectable to the valve (1, 2) and is hydraulically encapsulated, whilst for electrical control a terminal strip (58) for connecting the electric leads is mounted in the housing.

3. Apparatus according to claim 1, characterised in that the pump (8) is connected, via at least one adjustable pressure relief valve (10), to a reservoir (11) which is integrated in the assembly (48, 52).

4. Apparatus according to claim 1, characterised in that in the direction of delivery of the pump (8) between pressure lines (4, 5) there is an adjustable choke (41) which allows a backflow to the intake end of the pump from the delivery end.

5. Apparatus according to claims 1 to 3, characterised in that, between the valve (1, 2) and pump (8) with control elements (9, 10, 41), is mounted a safety device with at least one pressure relief valve (6) which serves to protect the valve and is connected to the reservoir (11).

6. Apparatus according to claims 1 to 4, characterised in that from the central control point (13) an electric lead (14) leads to each assembly (A, B, C) for actuating the electric motor (7) and switches (15) are mounted in the current supply line (14) which interrupt the supply of current when the valve reaches its end position, whilst at the central control point (13) there is a current monitoring device which responds to the switching off of the switches (15) in order to detect the end position of the valve.

7. Apparatus according to claims 1 to 4, characterised in that in a circuit (16) provided in the central control point (13) there is a timer which monitors the setting time of the valve by means of the signal emitted by the switches (15) which interrupt the supply of current from the electric motor (7).

8. Apparatus according to claims 1 to 4, characterised in that in the central control point (13) there is provided a bus system (26) which is connected, via a bus lead (28), to individual substations (24) provided on the assemblies (A, B, C) which are interconnected by bus leads (30).

9. Apparatus according to claim 8, characterised in that bus interfaces (33) are integrated in the individual assemblies.

10. Apparatus according to claim 8, characterised in that the power supply to the individual assemblies (A, B, C) is delivered to the bus system substation (29) or to the bus interface (33).

## Revendications

1. Dispositif pour l'actionnement de vannes à commande hydraulique, en particulier dans la construction navale, avec des pompes (8) entraînées par des moteurs (7) pour produire une pression hydraulique et un circuit hydraulique entre la pompe et la vanne, ainsi qu'un poste de commande central (13) pour les vannes,
caractérisé en ce que
pour chaque vanne individuelle (1, 2), il est prévu un moteur électrique (7), tandis que la vanne (1), le moteur électrique (7) et la pompe (8) conjointement avec le circuit hydraulique formant une unité modulaire compacte (A,B,C) et seul le moteur électrique (7) peut être commandé par le poste de commande central (13).

2. Dispositif selon la revendication 1,
caractérisé en ce que
dans un logement (52) qui peut être raccordé avec la vanne (1, 2) et qui est hydrauliquement étanche, sont agencés le moteur électrique (7), la pompe (35) et les éléments de commutation hydraulique ainsi qu'un réservoir (11), une réglette à bornes (58) étant prévue pour la commande électrique pour le raccordement des lignes électriques dans le logement.

3. Dispositif selon la revendication 1,
caractérisé en ce que
la pompe (8) est raccordée par l'intermédiaire d'au moins une soupape de limitation de pression (10) réglable à un réservoir (11) qui est incorporé dans l'unité (48, 52).

4. Dispositif selon la revendication 1,
caractérisé en ce que
dans le sens de refoulement de la pompe (8) entre les conduites de pression (4, 5) est disposé un dispositif d'étranglement (41) qui permet le retour vers le côté d'aspiration de la pompe depuis le côté du refoulement.

5. Dispositif selon les revendications 1 à 3,
caractérisé en ce qu'
entre la soupape (1, 2) et la pompe (8) avec les éléments de commande (9, 10, 41) est prévu un dispositif de sécurité avec au moins une soupape de limitation de pression (6) qui sert à la protection de la soupape et qui est raccordé au réservoir (11).

6. Dispositif selon les revendications 1 à 4,
caractérisé en ce qu'
à partir du poste de commande central (13) est menée une ligne électrique (14) à destination de chaque unité (A,B,C) pour la commande du moteur électrique (7) et dans la ligne d'alimentation de courant (14) sont disposés des interrupteurs (15) qui, dès que la soupape a atteint sa position d'extrémité, interrompent l'alimentation courant au moteur électrique (7), dans le poste de commande central (13) un dispositif de surveillance de courant étant prévu qui réagit lors de la coupure des interrupteurs (15) pour déterminer la position d'extrémité de la soupape.

7. Dispositif selon les revendications 1 à 4,
caractérisé en ce que
dans un circuit (16) disposé dans l'unité de commande centrale (13) est prévu un temporisateur ou minuterie qui surveille le temps d'ajustement de la soupape en fonction du signal qui est émis par les interrupteurs (15) coupant l'amenée de courant du moteur électrique (7).

8. Dispositif selon les revendications 1 à 4, caractérisé en ce que dans le poste de commande central (13) est prévu un système de bus (26) qui, par l'intermédiaire d'une conduite de bus (28), est en liaison avec les différentes sous-stations (24) prévues dans les unités (A,B,C) et qui sont raccordées entre elles par les conduites bus (30).

9. Dispositif selon la revendication 8,
caractérisé en ce que
dans les différentes unités sont prévus des postes de coupure de bus (33).

10. Dispositif selon la revendication 8,
caractérisé en ce que
l'amenée de courant de force aux différentes unités (A,B,C) s'effectue respectivement au niveau de la sous-station du système de bus (29) ou du poste de coupure de bus (33).
